# EUROPEAN PATENT APPLICATION

(11) **EP 1 158 449 A2**
(43) Date of publication of application: **28.11.2001**
(21) Application number: 01110657.2
(22) Date of filing: 02.05.2001
(51) Int. Cl.: G06F 19/00

(54) **Computerized method and apparatus for analyzing readings of nucleic acid assays**

(30) Priority: 19.05.2000 US 574031
(71) Applicant: Becton, Dickinson and Company, Franklin Lakes, New Jersey 07417 (US)
(72) Inventor: Kuhn, Andrew M., Baltimore, Maryland 21212 (US); Moore, Richard L., Catonsville, Maryland 21228 (US); Hellyer, Tobin J., Owings Mills, Maryland 21117 (US)
(74) Representative: Rambelli, Paolo

(57) **Abstract**

A computerized method and apparatus for analyzing numerical data pertaining to a sample assay comprising at least one biological or chemical sample, with the data including a set of data pertaining to each respective sample, and each set of data including a plurality of values each representing a condition of the respective sample at a point in time. The method and apparatus assigns a respective numerical value to each of the data values, corrects the data values by removing an additive background value from each of the data values, compares a graph of the data values to a threshold value, and controls the system to indicate whether the sample has a predetermined characteristic based on a result of the comparison. Additionally, prior to the sample value being calculated, filtering, normalizing and other correcting operations can be performed on the data to correct extraneous values in the data which could adversely affect the accuracy of the results.

## Description

### Cross-Reference To Related Patent and Application

Related subject matter is disclosed in a copending U.S. patent application of Harry Yang, Daniel L. Schwarz, Christopher M. Embres, Richard L. Moore, Perry D. Haaland and Paula V. Johnson entitled "Computerized Method and Apparatus for Analyzing Readings of Nucleic Acid Assays", Serial No. 09/196,123, filed on November 20, 1998, and in U.S. Patent No. 6,043,880 of Jeffrey P. Andrews, Christian V. O'Keefe, Brian G. Scrivens, Willard C. Pope, Timothy Hansen and Frank L. Failing entitled "Automated Optical Reader for Nucleic Acid Assays", the entire contents of said application and patent being expressly incorporated herein by reference.

### BACKGROUND OF THE INVENTION

### Field of the Invention:

The present invention relates generally to a computerized method and apparatus for analyzing sets of readings taken of respective samples in a biological or chemical assay, such as a nucleic acid assay, to determine which samples possess a certain predetermined characteristic. More particularly, the present invention relates to a computerized method and apparatus which graphically plots optical readings of a biological or chemical sample taken at different times during a reading period, corrects for an additive background value present in the readings, and compares the corrected readings to a threshold to detect for the presence of a particular characteristic of the sample, such as the presence of a targeted pathogen in the sample.

### Description of the Related Art:

In the clinical diagnosis of bacterial diseases, including sexually transmitted diseases such as gonorrhea (GC) and chlamydia trachomatis (CT), a sample of body fluid obtained from the patient is cultured to test for the presence of the particular bacterium of interest. Unfortunately, this is a relatively time-consuming process, generally requiring several days to produce a definitive result. During this time, a patient suspected of having such a disease must be isolated to prevent further spread of the disease.

The advent of DNA probes, which can identify specific bacteria by testing for the presence of a unique bacterial DNA sequence in the sample obtained from the patient, has greatly increased the speed and reliability of clinical diagnostic testing. A test for the presence of CT or GC, for example, in a sample can be completed within an hour or less using DNA probe technology. This allows treatment to begin more quickly, and avoids the need for long patient isolation times.

In the use of DNA probes for clinical diagnostic purposes, a nucleic acid amplification reaction is usually carried out in order to multiply the target nucleic acid into many copies or amplicons. Examples of nucleic acid amplification reactions include strand displacement amplification (SDA) and polymerase chain reaction (PCR). Unlike PCR, SDA is an isothermal process which does not require any external control over the progress of the reaction which causes amplification. Detection of the nucleic acid amplicons can be carried out in several ways, all involving hybridization (binding) between the target DNA and specific probes.
Many common DNA probe detection methods involve the use of fluorescein dyes. One known detection method is fluorescein energy transfer. In this method, a detector probe is labeled both with a fluorescein dye that emits light when excited by an outside source, and with a quencher which suppresses the emission of light from the flourescein dye in its native state. When DNA amplicons are present, the fluourescein-labled probe binds to the amplicons, is extended, and allows fluorescent emission to occur. The increase of fluorescence is taken as an indication that the disease-causing bacterium is present in the patient sample.

Several types of optical readers or scanners exist which are capable of exciting fluids samples with light, and then detecting any light that is generated by the fluid samples in response to the excitation. For example, an X-Y plate scanning apparatus, such as the CytoFluor Series 4000 made by PerSeptive Biosystems, is capable of scanning a plurality of fluid samples stored in an array of microwells. The apparatus includes a scanning head for emitting light towards a particular sample, and for detecting light generated from that sample. During operation, the optical head is moved to a suitable position with respect to one of the sample wells. A light emitting device is activated to transmit light through the optical head toward the sample well. If the fluid sample in the well fluoresces in response to the emitted light, the fluorescent light is received by the scanning head and transmitted to an optical detector. The detected light is converted by the optical detector into an electrical signal, the magnitude of which is indicative of the intensity of the detected light. This electrical signal is processed by a computer to determine whether the target DNA is present or absent in the fluid sample based on the magnitude of the electrical signal. Each well in the microwell tray (e.g., 96 microwells total) can be read in this manner.

Another more efficient and versatile sample well reading apparatus known as the BDProbeTec® ET system manufactured by Becton Dickinson and Company is described in the above-referenced U.S. Patent No. 6,043,880. In that system, a microwell array, such as the standard microwell array having 12 columns of eight microwells each (96 microwells total), is placed in a moveable stage which is driven past a scanning bar. The scanning bar includes eight light emitting/detecting ports that are spaced from each other at a distance substantially corresponding to the distance at which the microwells in each column are spaced from each other. Hence, an entire column of sample microwells can be read with each movement of the stage.

As described in more detail below, the stage is moved back and forth over the light sensing bar, so that a plurality of readings of each sample microwell are taken at desired intervals. In one example, readings of each microwell are taken at one minute intervals for a period of one hour. Accordingly, 60 readings of each microwell are taken during a well reading period. These readings are then used to determine which samples contain the particular targeted disease or diseases (e.g., CT and/or GC).

Several methods are known for analyzing the sample well reading data to determine whether a sample contained in the sample well includes the targeted disease or diseases. For instance, as discussed above, a nucleic acid amplification reaction will cause the target nucleic acid (e.g., CT or GC) to multiply into many amplicons. The fluorescein-labeled probe which binds to the amplicons will fluoresce when excited with light. As the number of amplicons increases over time while the nucleic acid amplification reaction progresses, the amount of fluorescence correspondingly increases. Accordingly, after a predetermined period of time has elapsed (e.g. 1 hour), the magnitude of fluorescence emission from a sample having the targeted disease (a positive sample) is much greater then the magnitude of fluorescence emission from a sample not having the targeted disease (a negative sample). In actuality, the magnitude of fluorescence of a negative sample essentially does not change throughout the duration of the test.

Therefore, the value of the last reading taken for each sample can be compared with a known threshold value, which has previously been determined. If the sample value is above the threshold value, the sample is identified as a positive sample in which the targeted disease is present. However, if the last value taken of the sample is below the threshold value, the sample is identified as a negative sample free from the disease.

Although this "endpoint detection" method can generally be effective in identifying positive and negative samples, it is not uncommon for this method to incorrectly identify a negative sample as being positive or vice versa. That is, the accuracy of the value of any individual sample reading can be adversely effected by factors such as a bubble forming in the sample, obstruction of excitation light and/or fluorescence emission from the sample due to the presence of debris on the optical reader, and so on. Accordingly, if the final reading of a particular sample is erroneous and only that reading is analyzed, the likelihood of obtaining a false positive or false negative result is high.

Furthermore, in some instances, the amount of amplicons decreases as the testing progresses. Due to this decrease in amplicons, the magnitude of fluorescent emission from the sample decreases with the passage of time. Accordingly, the magnitude of the last reading taken of the sample can be less than the magnitude of a reading taken at the time when the amount of amplicons present in the sample is at its peak. In some instances, the decrease in amplicons can result in the magnitude of fluorescent emission from the sample being lower then the predetermined threshold value, in which event the positive sample is falsely identified as a negative sample.

In order to avoid these drawbacks, other methods have been developed. In one method, the overall change in the magnitudes of sample readings is calculated and compared to a known value having a magnitude indicative of a positive result. Accordingly, if the magnitude of change is greater than the predetermined value, the sample is identified as a positive sample having the targeted disease. On the other hand, if the magnitude of change is less than the predetermined value, the sample is identified as a negative sample.

Although this method may be more effective then the endpoint detection method discussed above, certain flaws in this method also exist. For example, if a sample contains a particularly large amount of the disease, the amount of amplicons generated due to the amplification process may reach a maximum at the time the initial reading is taken, and increase very little, if at all, or decrease, throughout the duration of the reading period. In this event, the change which occurs between the initial readings and final readings is minimal even though the sample is very positive. Hence, the sample may incorrectly be identified as a negative sample.

Another known method is the acceleration index method which measures incremental changes in the sample readings, and compares those changes to a predetermined value. Although this method is generally effective, the accuracy of its results are susceptible to errors present in the individual readings, as well as readings taken of samples in which the amount of amplicons decreases over time.

Accordingly, a continuing need exist for a method an apparatus for analyzing data representative of readings taken of sample wells to accurately identify the samples as being positive or negative for a particular disease.

### SUMMARY OF THE INVENTION

An object of the present invention is to provide a method and apparatus for accurately interpreting the values of data obtained from taking readings of a biological or chemical sample, to ascertain the presence of a particular disease in the sample based on the data values.

Another object of the invention is to provide a method and apparatus, for use with an optical sample well reader, which accurately interprets data representing magnitudes of fluorescence emissions detected from the sample at predetermined periods of time, to ascertain the presence of a particular disease in the sample.

A further object of the invention is to provide a method and apparatus for analyzing data obtained from reading a biological or chemical sample contained in a sample well, and without using complicated arithmetic computations, correcting for errors in the data which could adversely affect the results of the analysis.

These and other objects of the invention are substantially achieved by providing a computerized method and apparatus for analyzing numerical data pertaining to a sample assay comprising at least one biological or chemical sample, with the data including a set of data pertaining to each respective sample, and each set of data including a plurality of values each representing a condition of the respective sample at a point in time. The method and apparatus assigns a respective numerical value to each of the data values, removes an additive background value from each of the data values to produce corrected data values, compares the values to a threshold value to determine when the data values begin to exceed the threshold value, and controls the system to indicate whether the sample has a predetermined characteristic based on a result of the comparison. Additionally, prior to the comparison to the threshold value, filtering, normalizing and other correcting operations can be performed on the data to correct extraneous values in the data which could adversely affect the accuracy of the results.

The method and apparatus can perform all of the above functions by representing each of the plurality of data values as points on a graph having a vertical axis representing the magnitudes of the values and a horizontal axis representing a period of time during which readings of the sample were taken to obtain said plurality of data values, correcting the data values to eliminate an additive background value present in each of the data values to produce a corrected plot of points on the graph, with each of the points of the corrected plot of points representing a magnitude of a corresponding one of the values. The corrected plot of points is compared to a threshold value to determine if and when the points exceed the threshold value, to therefore determine whether a certain condition, such as a pathogen, exists in the sample to which the set of data pertains.

### BRIEF DESCRIPTION OF THE DRAWINGS

The and other objects of the invention will be more readily appreciated from the following detailed description when read in conjunction with the accompanying drawings in which:
Fig. 1 is schematic view of an apparatus for optically reading sample wells of a sample well array, and which employs an embodiment of the present invention to interpret the sample well readings;
Fig. 2 is an exploded perspective view of a sample well tray for use in the sample well reading apparatus shown in Fig. 1;
Fig. 3 is a detailed perspective view of a stage assembly employed in the apparatus shown in Fig. 1, for receiving and conveying a sample well tray assembly shown in Fig. 2.
Fig. 4 is a diagram illustrating the layout of a light sensor bar and corresponding fiber optic cables, light emitting diodes and light detector employed in the apparatus shown in Fig. 1, in relation to a sample well tray being conveyed past the light sensor bar by the stage assembly shown in Fig. 3;
Fig. 5 is a graph illustrating values representing the magnitudes of fluorescent emissions detected from a sample well of the sample well tray shown in Fig. 2 by the apparatus shown in Fig. 1, with the values being plotted as a function of the times at which their corresponding fluorescent emissions were detected;
Fig. 6 is a flowchart showing steps of a method for normalizing, filtering, adjusting and interpreting the data in the graph shown in Fig. 5 according to an embodiment of the present invention;
Fig. 7 is a flowchart showing steps of the dark correction processing step of the flowchart shown in Fig. 6;
Fig. 8 is a flowchart showing steps of the impulse noise filter processing step of the flowchart shown in Fig. 6;
Fig. 9 is a flowchart showing steps of the dynamic normalization processing step of the flowchart show in Fig. 6;
Fig. 10 is a flowchart showing steps of the impulse noise filter processing step of the flowchart shown in Fig. 6;
Fig. 11 is a graph which results after performing the dark correction, impulse noise filter, and dynamic normalization steps in the flowchart shown in Fig. 6 on the graph shown in Fig. 5;
Fig. 12 is a flowchart showing steps of the step location and removal processing step of the flowchart shown in Fig. 6;
Fig. 13 is a graph which results from performing the step location and repair step of the flowchart show in Fig. 6 on the graph shown in Fig. 11;
Fig. 14 is a flowchart showing steps of the periodic noise filter operation step of the flowchart shown in Fig. 6;
Fig. 15 is a flowchart showing steps of the well present determining step of the flowchart shown in Fig. 6;
Fig. 16 is a flowchart showing steps of the background correction step of the flowchart shown in Fig. 6;
Fig. 17 is a graph which results from performing the background correction step of the flowchart show in Fig. 6 on the graph show in Fig. 13;
Fig. 18 is a flowchart showing steps of the threshold comparison step of the flowchart shown in Fig. 6;
Fig. 19 illustrates the comparison of a threshold value to the graph shown in Fig. 17;
Fig. 20 illustrates the comparison of a threshold value to a graph generated from a very high positive sample; and
Fig. 21 illustrates the comparison of a threshold value to a graph generated from a negative sample.

### DETAILED DESCRIPTION OF THE PREFERRED EMBODIMENTS

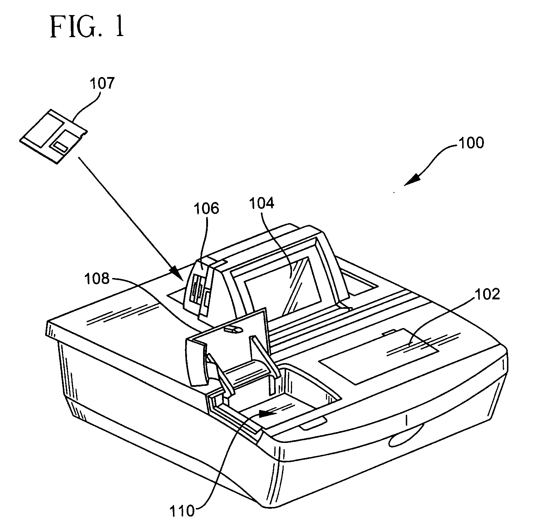

A well reading apparatus 100 according to an embodiment of the present invention is shown in Fig. 1. The apparatus 100 includes a key pad 102, which enables an operator to enter data and thus control operation of the apparatus 100. The apparatus 100 further includes a display screen 104, such as an LCD display screen or the like, for displaying "soft keys" which allow the operator to enter data and control operation of the apparatus 100, and for displaying information in response to the operator's commands, as well as data pertaining to the scanning information gathered from the samples in the manner described below. The apparatus also includes a disk drive 106 into which can be inserted a floppy disk for storing data generated by the apparatus 100, or from which the apparatus can read data.

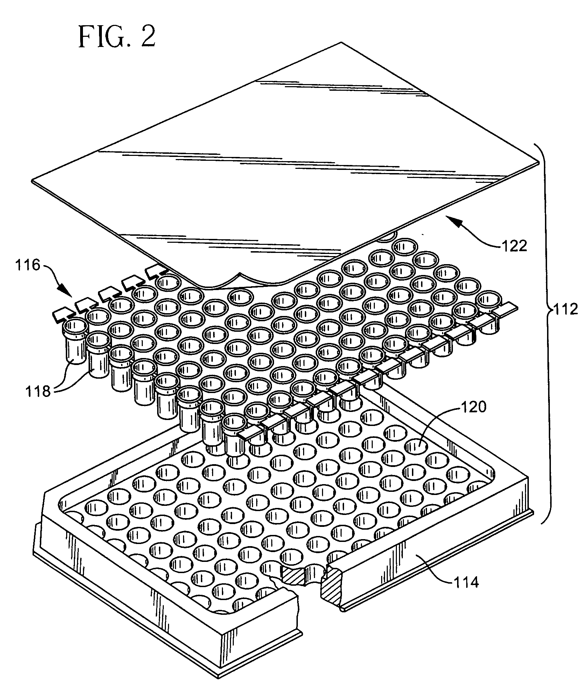

The apparatus 100 further includes as door 108 which allows access to a stage assembly 110 into which can be loaded a sample tray assembly 112. As shown in Fig. 2, a sample tray assembly 112 includes a tray 114 into which is loaded a microwell array 116, which can be a standard microwell array having 96 individual microwells 118 arranged in 12 columns of 8 microwells each. The tray 114 has openings 120 which pass entirely through the tray and are arranged in 12 columns of eight microwells each, such that each opening 120 accommodates a microwell 118 of microwell array 116. After the samples have been placed into the microwells 118, a cover 122 can be secured over microwells 118 to retain each fluid sample in its respective microwell 118. Further details of the sample tray assembly 112 and of sample collection techniques are described in the aforementioned U.S. Patent No. 6,043,880.

Each microwell can include one type of detector probe, as described above, for identifying a particular disease (e.g., GC or CT). If the microwell array 116 is to be used to test for GC and CT in each patient sample, the microwells 118 are arranged in groups of three microwells each, with one microwell in the group containing a reagent which is used to identify the presence of GC, another microwell in the group a reagent which is used to identify the presence of CT, and the third microwell containing an amplification control reagent AC, the purpose of which is described in more detail below. A fluid sample from a particular patient is placed in all three wells of a particular group of wells.

Additionally, some (e.g., two) of the 96 microwells 118 in the microwell array 116 can be designated as control sample wells for a particular disease, such as CT, with one of the control sample wells containing a control positive sample and the other control well containing a control negative sample, the purpose of which is described in detail below. Also, other (e.g., two other) microwells 118 can be designated as control microwell sample wells for GC, with one of the control microwell sample wells including a positive sample and the other including a negative sample. Furthermore, other (e.g., two other) microwells 118 can be designated as control microwell sample wells for AC, with one of the control microwell sample wells including a positive sample and the other including a negative sample. Accordingly, in this example, a maximum of 30 patient samples can be tested for each microwell array 116 arranged in this manner (i.e., 30 samples x 3 microwells each = 90 microwells, with the remaining six microwells being used for control samples as discussed above).

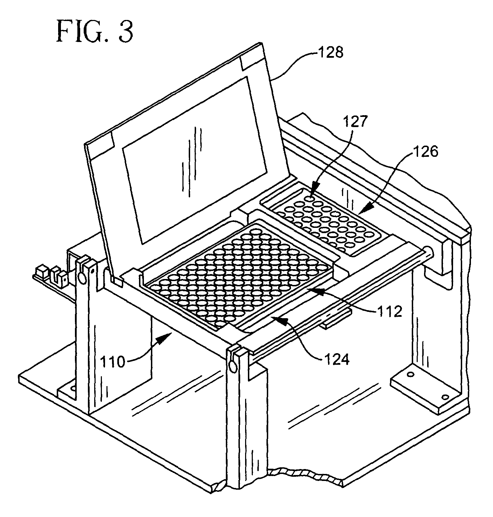

After the patient fluid samples have been placed in the appropriate microwells 118 of the microwell array 116 in sample tray assembly 112, the sample tray assembly 112 is loaded into the stage assembly 110 of the well reading apparatus 100. The stage assembly 110 is shown in more detail in Fig. 3. Specifically the stage assembly 110 includes an opening 124 for receiving a sample tray assembly 112. The stage assembly 110 further includes a plurality of control wells 126 which are used in calibrating and verifying the integrity of the reading components of the well reading apparatus 100. Among these control wells 126 is a column of eight normalization wells 127, the purpose of which is described in more detail below. The stage assembly 110 further includes a cover 128 which covers the sample tray assembly 112 and control wells 126 when the sample tray assembly 112 has been loaded into the opening 124 and sample reading is to begin. Further details of the stage assembly 110 are described in the above-referenced U.S. Patent No. 6,043,880

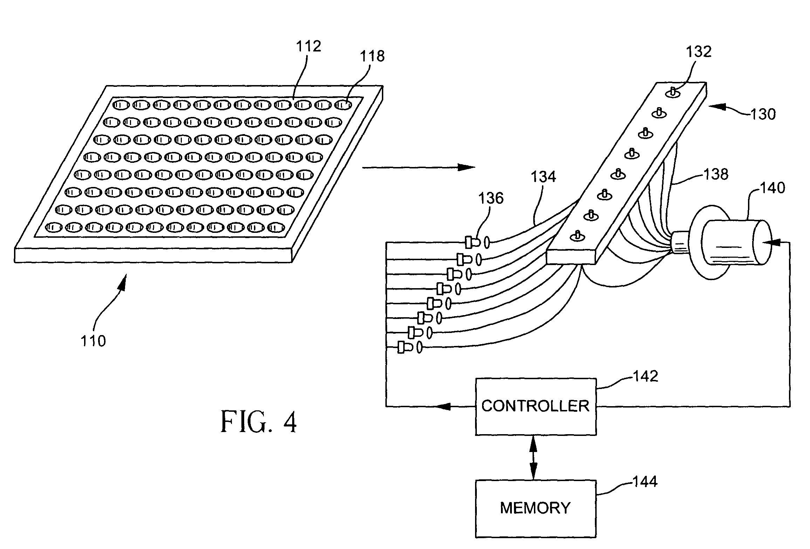

To read the samples contained in the microwells 118 of a sample tray assembly 112 that has been loaded into the stage assembly 110, the stage assembly 110 is conveyed past a light sensing bar 130 as shown in Fig. 4. The light sensor bar 130 includes a plurality of light emitting/detecting ports 132. The light emitting/detecting ports 132 are controlled to emit light towards a column of 8 microwells 118 when the stage assembly 110 positions those microwells 118 over the light emitting/detecting ports, and to detect fluorescent light being emitted from the samples contained in those microwells 118. In this example, the light sensor bar 130 includes 8 light emitting/detecting ports 132 which are arranged to substantially align with the 8 microwells 118 in a column of the microwell array 116 when that column of microwells 118 is positioned over the light emitting/detecting ports 132.

The light emitting/detecting ports 132 are coupled by respective fiber optic cables 134 to respective light emitting devices 136, such as LEDs or the like. The light emitting/detecting ports 132 are further coupled by respective fiber optic cables 138 to an optical detector 140, such as a photomultiplier tube or the like. Further details of the light sensor bar 130 and related components, as well as the manner in which the stage assembly 110 is conveyed past the light sensor bar 130 for reading the samples contained in the microwells 118, are described in the above-referenced U.S. Patent No. 6,043,880.

In general, one reading for each microwell is taken at a particular interval in time, and additional readings of each microwell are taken at respective intervals in time for a predetermined duration of time. In this example, one microwell reading is obtained for each microwell 118 at approximately one minute intervals for a period of one hour. One reading of each of the normalization wells 127, as well as one "dark" reading for each of the light emitting/detecting ports 132, are taken at each one minute intervals. Accordingly, 60 microwell readings of each microwell 118, as well as 60 readings of each normalization well 127 and 60 dark readings, are obtained during the one hour period. As discussed above, a reading is a measurement of the intensity of the fluorescent emission being generated by a microwell sample in response to excitation light emitted onto the sample. These intensity values are stored in magnitudes of relative fluorescent units (RFU). A reading of a sample having a high magnitude of fluorescent emissions will provide an RFU value much higher then that provided by a reading taken of a sample having low fluorescent emissions.

Once the total number of readings (e.g. 60 readings) for each sample well have been taken, the readings for each sample must be interpreted by the well reading apparatus 100 so the well reading apparatus 100 can indicate whether the sample has tested positive or negative for a particular disease (e.g. CT or GC). The microprocessing unit of the well reading apparatus 100 is controlled by software to perform the following operations on the data representing the sample well readings. The operations being described are applied in essentially the same manner to the readings taken for each sample microwell 118. Accordingly, for illustrative purposes, the operations will described with regard to readings taken for one sample microwell 118, which will be referred to as the first sample microwell 118.

As discussed above, during each one-minute interval in which all of the microwells 118 in the sample tray assembly 112 are read, the light sensor bar 130 reads the normalization wells one time. Hence after 60 readings of each microwell sample have been taken, each normalization well 127 has been read 60 times by its respective light emitting/detecting port 132 of the light sensor bar 130, which results in eight sets of 60 normalization well readings. For illustrative purposes, the normalization readings of the normalization well 127 that has been read by the light emitting/detecting port 132 which has also read the first sample microwell 118 now being discussed, are represented as n₁ through n₆₀.

Additionally, as discussed above, during each one-minute interval, the optical detector 140 is controlled to obtain a "dark" reading in which a reading is taken without any of the light emitting devices 136 being activated. This allows the optical detector 140 to detect any ambient light that may be present in the system. The dark readings are taken for each light emitting/detecting port 132. Accordingly, after 60 readings of every microwell 118 have been obtained, eight sets of 60 dark readings (i.e., one set of 60 dark readings for each of the eight light emitting/detecting portions 132) have been obtained. For illustrative purposes, the dark readings obtained by the light emitting/detecting port 132 which read the first sample microwell 118 now being discussed are represented as d₁ through d₆₀.

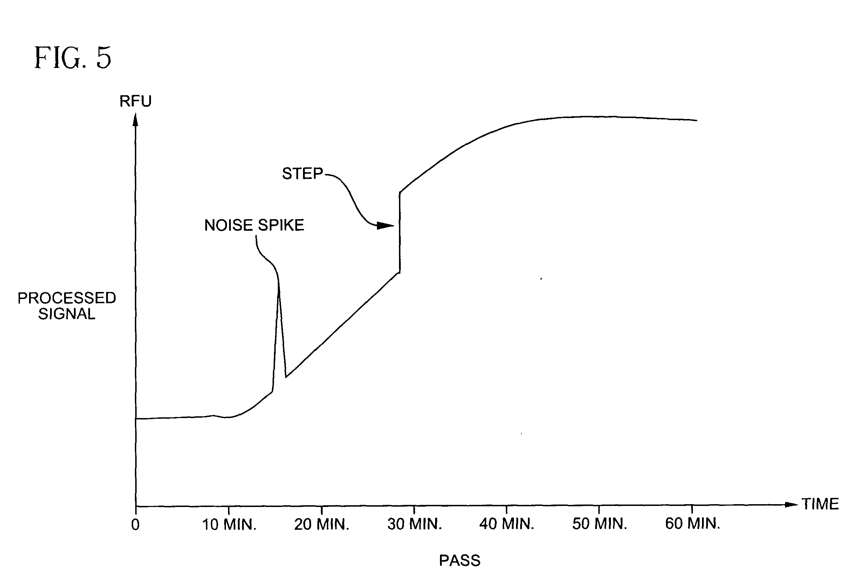

Fig. 5 is a graph showing the relationship of the 60 readings for one well which have been obtained during the one hour reading period. For illustrative purposes, these readings are represented as r₁ through r₆₀. These readings are plotted on the graph of Fig. 5 with their RFU value being represented on the vertical axis with respect to the time in minutes at which the readings were taken during the reading period.

As can be appreciated from the graph, the RFU values for the readings taken later in the reading period are greater than the RFU values of the readings taken at the beginning of the reading. For illustrative purposes, this example shows the trend in readings for a well that contains the particular disease (e.g., CT or GC) for which the well is being tested.

As can also be appreciated from Fig. 5, the graph of the "raw data" readings include a noise spike and a step as shown. The process that will now be described eliminates any noise spikes, steps or other apparent abnormalities in the graph which are the result of erroneous readings being taken of the sample well.

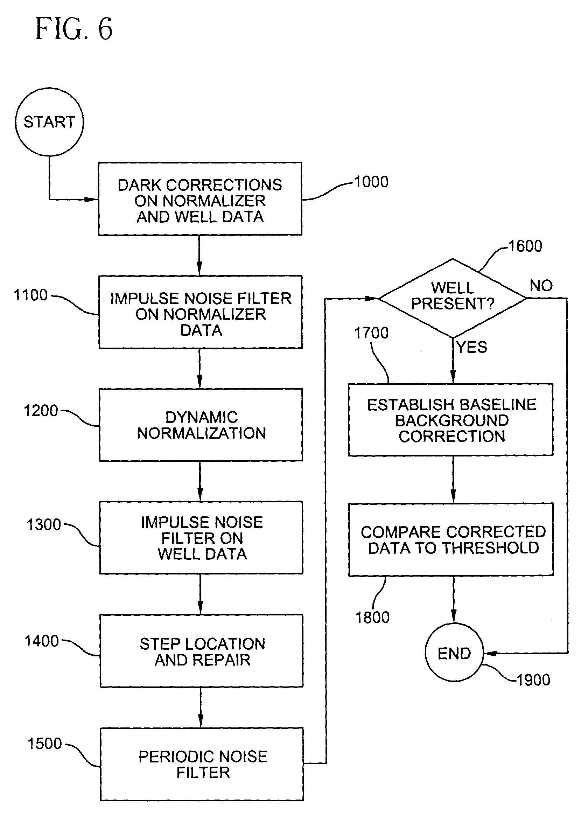

The flowchart shown in Fig. 6 represents the overall process for interpreting the graph of raw data readings r₁ through r₆₀ shown in Fig. 5 to provide a well sample result which is used to determine whether the well sample includes the particular target disease for which it is being tested. These processes are performed by the controller (not shown) of the well reading apparatus 100 as controlled by software, which can be stored in a memory (not shown) resident in the well reading apparatus 100, or on a disk inserted into disk drive 106.

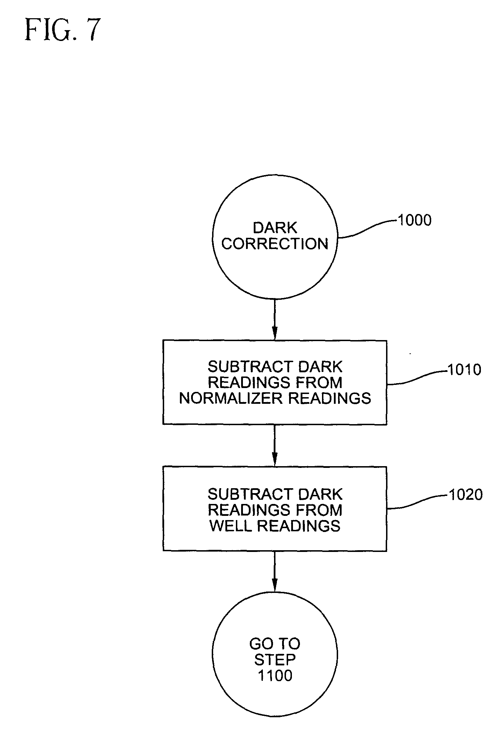

As shown in Fig. 6, the software initially controls the controller to perform a dark correction on the normalizer data readings n₁ through n₆₀ and on the well readings r₁ through r₆₀. The details of this step are shown in the flowchart of Fig. 7 and in Step 1 of the pseudo-code set forth in the attached Appendix.

In particular, in Step 1010, the dark reading values d₁ through d₆₀ are subtracted from the corresponding normalizer reading values n₁ through n₆₀, respectively, to provide corrected normalizer readings cn₁ through cn₆₀, respectively. That is, dark reading d₁ is subtracted from normalizer reading n₁ to provide corrected normalizer reading cn₁, dark reading d₂ is subtracted from normalizer reading n₂ to provide corrected normalizer reading cn₂, and so on.

The processing then proceeds to Step 1020 in which the dark readings d₁ through d₆₀ are subtracted from their corresponding well readings r₁ through r₆₀, respectively to provide corrected well readings c₁ through c₆₀, respectively. That is, dark well reading d₁ is subtracted from well reading r₁ to provide corrected well reading c₁, dark reading d₂ is subtracted from well reading r₂ to provide corrected well reading cr₂, respectively, and so on.

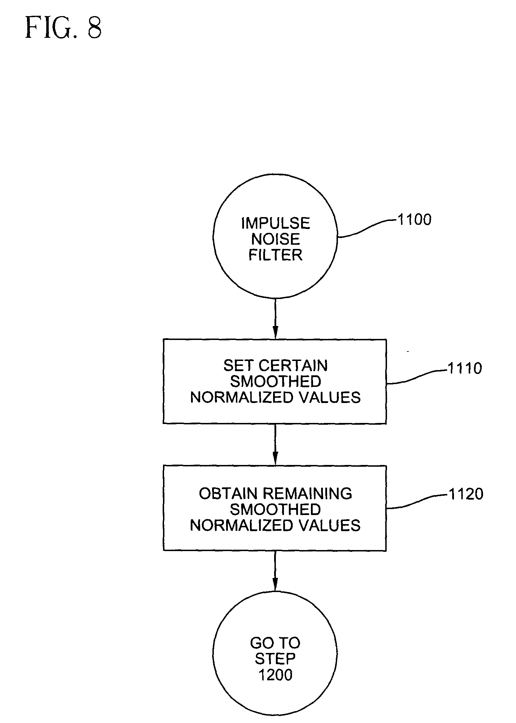

After all of the corrected normalizer readings and corrected well readings have been obtained, the processing continues to the filtering operations Step 1100 of the flowchart shown in Fig. 6, in which noise is filtered from the corrected normalizer readings cn₁ through cn₆₀, which were obtained during Step 1010 described above. Details of Step 1100 are shown in Fig. 8, and in Step 2 in the attached pseudo-code. Specifically, in this example, a 5 point running median is applied to the corrected normalizer readings cr₁ through cr₆₀.

As shown in Step 1110, the first two smoothed normalizer values xn₁ and xn₂ are set equal to the first two corrected normalizer values cn₁ and cn₂, respectively, while the last two smoothed normalizer values xn₅₉ and xn₆₀ are said equal to the last two corrected normalizer values cn₅₉ and cn_{60.} Then, in Step 1120, smoothed normalizer values xn₃ through xn₅₈ are obtained as an average or midpoint value of their corresponding corrected normalizer values cn₃ through cn₅₈, respectively, and surrounding corrected normalizer values. For example, smoothed normalizer value xn₃ is set equal to an average or midpoint value of corrected normalizer values cn₁, cn₂, cn₃, cn₄, and cn₅. Similarly, the smoothed normalizer value xn₄ is set equal to an average or midpoint value of corrected normalizer values cn₂, cn₃, cn₄, cn₅, and cn₆, and smoothed normalizer values xn₅ through xn₅₈ are calculated in a similar manner.

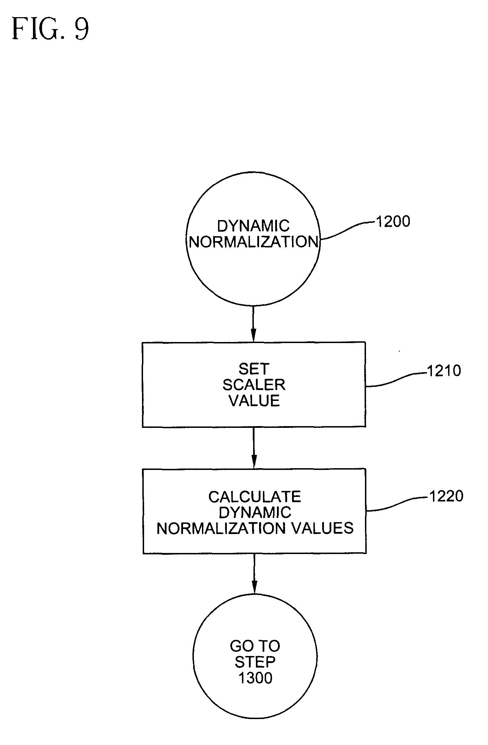

Once all smoothed normalizer values xn₁ through xn₆₀ have been obtained, the processing continues to the dynamic normalization step 1200 shown in the flowchart of Fig. 6. The details of the dynamic normalization process is shown in the flowchart of Fig. 9, as well as in Step 3 of the attached pseudo-code. Specifically in this example, the smoothed normalizer values xn₁ through xn₆₀, as well as the corrected well reading values cr₁ through cr₆₀ are used to calculate dynamic normalization values in nr₁ through nr₆₀.

In Step 1210, a scalar value is set which is employed in the calculations. In this example, the scalar value is 3000, but can be any suitable value. The processing then proceeds to Step 1220, where the scalar value, corrected well reading values, and smoothed normalize values are used to calculate dynamic normalization values. In particular, to calculate the dynamic normalization values, the corresponding corrected well value is multiplied by the scalar value, and then that total is divided by the corresponding smoothed normalizer value. For instance, to obtain dynamic normalization value nr₁, corrected well reading value cr₁ is multiplied by 3000 (the scalar value), and then that total is divided by the value of smoothed normalizer xn₁. Similarly, dynamic normalization value nr₂ is calculated by multiplying corrected well reading value cr₂ by 3000, and then dividing that total by smoothed normalizer value xn₂. This process continues until all 60 dynamic normalization values nr₁ through nr₆₀ have been obtained.

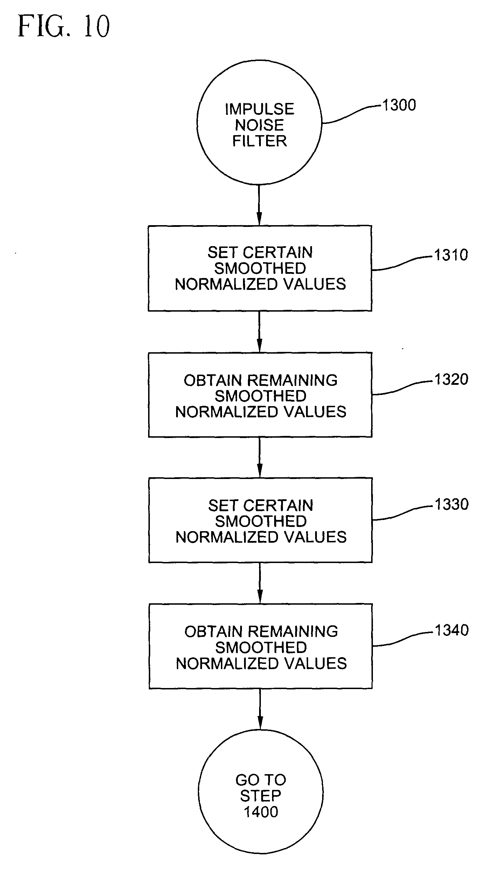

The processing then continues to perform the input noise filtering operation on the well data as shown in Step 1300 of the flowchart in Fig. 6. The details of this operation are shown in the flowchart of Fig. 10, as well as in Step 4 of the attached pseudo-code. In Step 1300, a three point running median is applied to the dynamic normalization values nr₁ through nr₆₀ to obtain smoothed normalized values x₁ through x₆₀. To perform this operation, as shown in Step 1310, the first smoothed normalized value x₁ is set equal to the first dynamic normalization value in r₁, and the last smoothed normalized value x₆₀ is set equal to the last dynamic normalization value in r₆₀. The processing then proceeds to Step 1320, where the smoothed normalized values x₂ through x₅₉ are obtained. These values are obtained by applying a three point running median to the dynamic normalization values, such that the smoothed normalized values x₂ through x₅₉ are obtained by calculating an average or midpoint of their corresponding dynamic normalization values nr₂ through nr₅₉, respectively, and the surrounding normalization values.

That is, in this example, smoothed normalized value x₂ is obtained by taking the average or midpoint of dynamic normalization values nr₁, nr₂, and nr₃. Similarly, smoothed normalized value x₃ is obtained by taking the average or midpoint of dynamic normalized value nr₂, nr₃, and nr₄. Smoothed normalize values x₄ through x₅₉ are obtained in a similar manner.

Once the smoothed normalized values x₁ through x₆₀ have been obtained, a three point running median is applied to those values to obtain smoothed normalized values z₁ through z₆₀. That is, in Step 1330, smoothed normalized value z₁ is set equal to smoothed normalized value x₁, and smoothed normalized value z₆₀ is set equal to smoothed normalized value x₆₀. Then, in Step 1340, smoothed normalized values z₂ through z₅₉ are obtained by calculating an average or midpoint of their corresponding smoothed normalized value x₂ through x₅₉ and the surrounding smoothed normalized values. That is, smoothed normalized value z₂ is obtained by calculating the average or midpoint of smoothed normalized values x₁, x₂, and x₃. Similarly, smoothed normalized value z₃ is obtained by calculating the average or midpoint of smoothed normalized values x₂, x₃, and x₄. Smoothed normalized value z₄ through z₅₉ are then obtained in a similar manner.

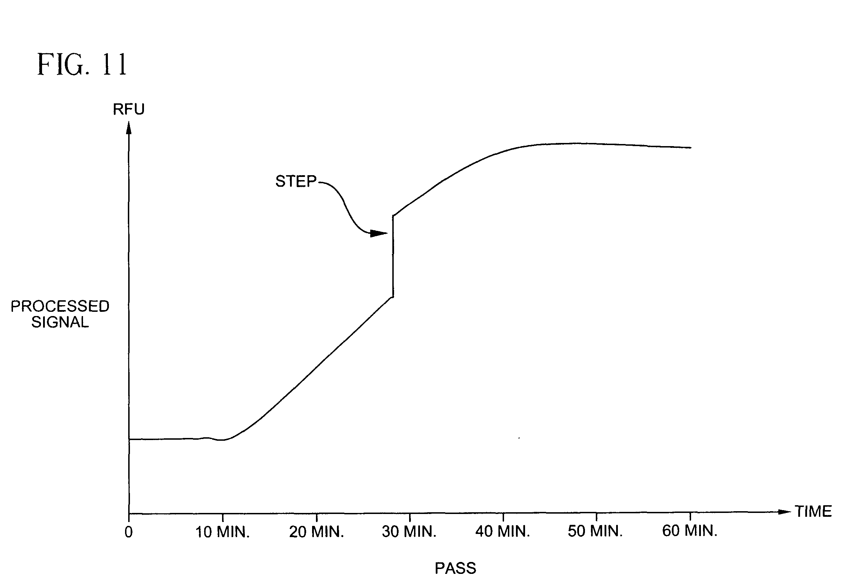

After Steps 1000 through 1300 of the flowchart in Fig. 6 have been performed as described above, the well readings have therefore been smoothened and normalized, and are represented by the smoothed normalized values z₁ through z₅₀. Accordingly, as shown in the graph of Fig. 11, when the smoothed normalized values z₁ through z₆₀ are plotted with respect to a corresponding time periods in which their corresponding well readings have been obtained, the noise spikes in the graph have been eliminated.

However, these smoothing and normalizing operation did not remove the step which is present in the graph as shown in Fig. 11. This increase in the reading values, which resulted in the step appearing in the graph, was likely caused by the presence of a bubble in the well which formed after the 30^{th} well reading was obtained (i.e., after an elapsed time of 30 minutes), but before the 31^{st} well reading was obtained. Accordingly, the magnitude of well reading values r₃₁ through r₆₀ and hence, and magnitude of smoothed and normalized values z₃₁ through z₆₀ have been increased due to the presence of this bubble. Therefore, it is necessary to reduce the smoothed normalized values z₃₁ through z₆₀ by a value proportionate to the size of the step.

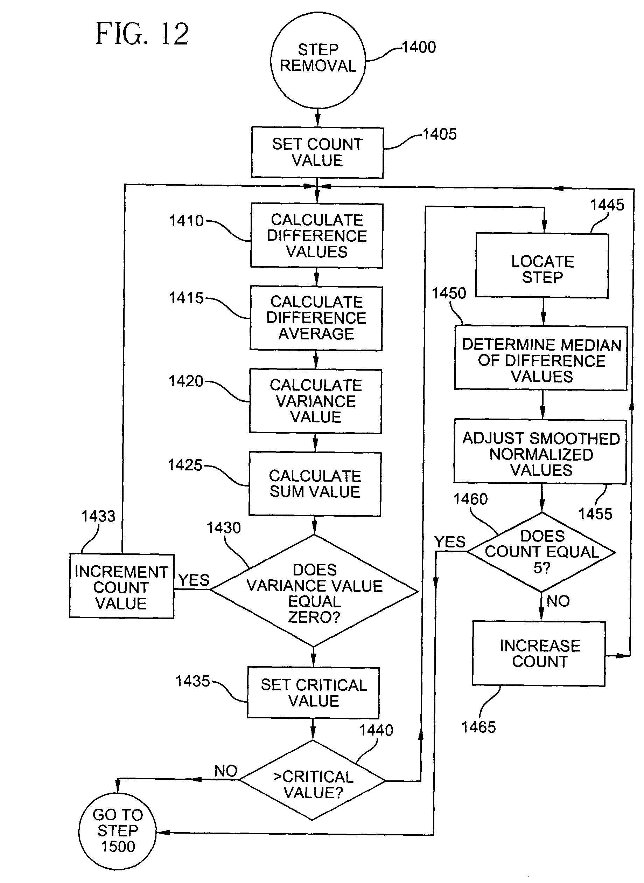

The step removal operation is performed in Step 1400 as shown in the flowchart in Fig. 6. Details of the step removal operation are set forth in the flowchart in Fig. 12, and in Step 5 of the attached pseudo-code.

It has been determined that graphs of these types generally will have only one or possibly two steps, and will almost never have more than five steps. Accordingly, all of the steps in the graph will have been located and removed after performing the step locating process five times. Accordingly, in Step 1405 in the flowchart of Fig. 12, a count value is set to allow the process to repeat a maximum of five times. The process then proceeds to step 1410, where difference values dr₁ through dr₅₉ are calculated which represent the differences adjacent smoothed normalized value z₁ through z₆₀. That is, the first difference value dr₁ is calculated as the value of smoothed normalized value z₂ minus smoothed normalized value z₁. The second difference value dr₂ is calculated as the value of smoothed normalized value z₃ minus smoothed normalized value z₂. This process is repeated until 59 difference values dr₁ through dr₅₉ have been obtained.

The processing then continues to Step 1415, in which the difference values dr₁ through dr₅₉ are added together to provide an average total, which is then divided by 59 to provide a difference average 'dr. The processing then continues to Step 1420, where a variance value var(dr) is calculated. This variance value is calculated by subtracting the difference value 'dr from each difference value dr₁ through dr₅₉, squaring each subtraction value, and then summing the totals of the squared values. For example, the difference value 'dr is subtracted from the first difference value dr₁ to provide a total, which is then squared. The difference value 'dr is then subtracted from the second difference value dr₂, and that total is squared. This process continues for all remaining difference values dr₃ through dr₅₉. These 59 "squared" totals are then added and divided by 58 to obtain the variance value (dr).

The process then continues to Step 1425 where a sum value "s" is calculated. This sum value is calculated by subtracting the difference value 'dr from each of the difference values dr₁ through dr₅₉, taking each result to the fourth power to obtain a set of 59 quadrupled results, and then adding all of the 59 quadrupled results. That is, the difference value 'dr is subtracted from the first difference value dr₁ to provide a result. That result is then taken to the fourth power to provide a first quadrupled result. The difference value 'dr is subtracted from second difference value dr₂, and the result of the subtraction is taken to the fourth power to provide a second quadrupled result. This process is repeated for the remaining difference values dr₃ through dr₅₉ until all 59 quadrupled results have been calculated. The 59 quadrupled results are then added to provide the sum value "s".

In Step 1430, the processing determines whether the variance value var(dr) is equal to zero. If the value of var(dr) is equal to zero, the processing proceeds to Step 1433, where the count value is incremented by one, and Steps 1410 through 1425 are repeated as discussed above. However, if the value of var(dr) is not equal to zero, then the processing proceeds to Step 1435. In Step 1435, as critical value CRIT_VAL is set equal to 4.9. The processing then proceeds to Step 1440, where it is determined whether the value of sum "s" divided by the total of var(d) squared multiplied by 59 is greater than the value of CRIT_VAL. If the calculated value is not greater than CRIT_VAL, then the step location and repair processing is completed, and the processing continues to the periodic noise filter processing in Step 1500 shown in the flowchart of Fig. 6.

However, if the total is greater than the value of CRIT_VAL, then the processing proceeds to Step 1445 where processing will be performed to determine the location of the step. This is accomplished by subtracting the difference value 'dr from each of the 1 through 59 difference values dr₁ through dr₅₉, taking the absolute value of each of those subtraction results, and determining which of the absolute values is the greatest. For example, the processing first subtracts the values 'dr from the first difference value dr₁, and takes the absolute value of that result. This absolute value is compared with a variable "max", which has initially been set to zero. If the absolute value is greater, the variable max is set to that absolute value, and the variable maxpt_dr is set equal to the number of the difference value, which in this case is 1.

The processing then subtracts difference value 'dr from the second difference value dr₂, and takes the absolute value of that subtraction value. The processing determines whether that absolute value is greater than the new "max" value. If the absolute value is greater, then "max" is set to that absolute value, and maxpt_dr is set equal to 2. This process is repeated for all remaining difference values dr₃ through dr₅₉. After the process is completed, maxpt_dr will be set equal to the number of the smoothed normalized value at which the step has occurred. As discussed above, in this example, it is presumed that the step occurred at value z₃₀. Accordingly, maxpt_dr is set to 30.

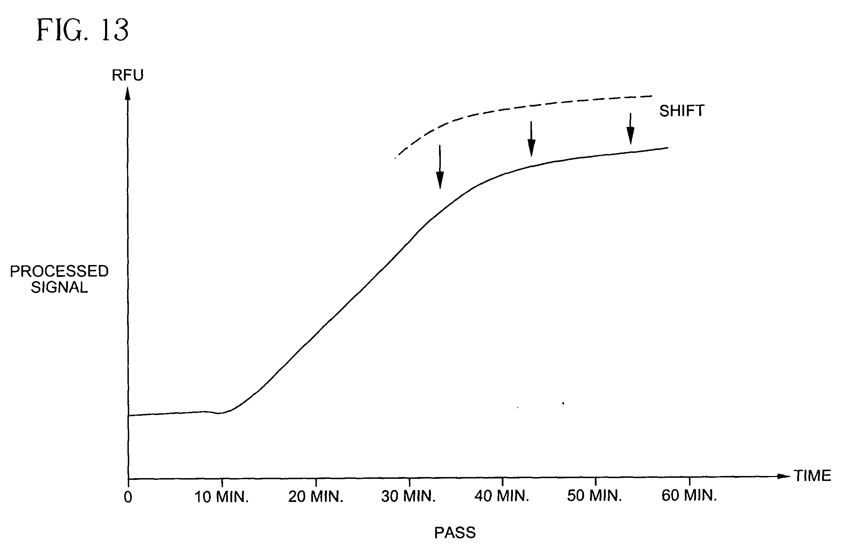

The process then continues to Step 1450 during which the median difference value of the difference values dr₁ through dr₅₉ is determined. Then, in Step 1455, the smoothed normalized values occurring after the step are decreased by the difference value calculated for the smoothed normalized value at which the step occurred, and then increased by the median difference value calculated in Step 1450. For example, the smoothed normalized values z₃₁ through z₆₀ are each decreased by the magnitude of difference dr₃₀ (the step occurred after the 30^{th} reading), and then the smoothed normalized values z₃₁ through z₆₀ are then each increased by the median difference value calculated in Step 1450. As shown in Fig. 13, this process has the affect of shifting the entire portion of the curve representing the RFU values of z₃₁ through z₆₀ downward, thus eliminating the step.

The processing then proceeds to Step 1460 where it is determined whether the entire process has been repeated five times. If the value of count does not equal five, the value of count is increased by one in Step in 1465, and the processing returns to Step 1410 and repeats as discussed above. However, if the value of count is equal to five, the processing proceeds to the periodic noise filter Step 1500 in the flowchart shown in Fig. 6.

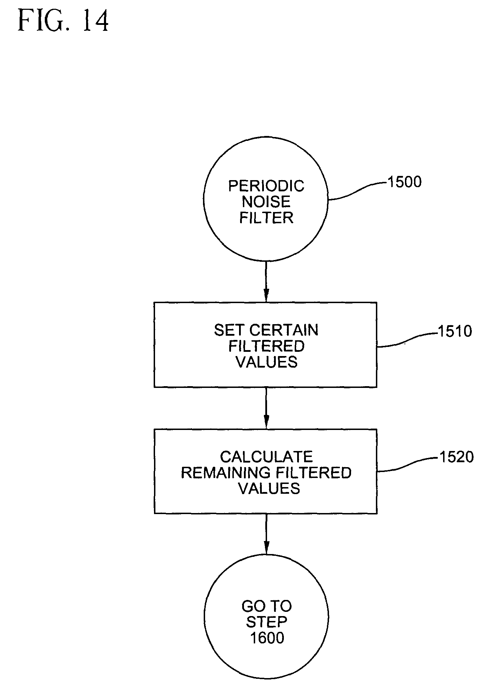

The periodic noise filtering operation 1500 is performed to further filter out erroneous values which may exist in the graph shown in Fig. 13 in which the step has been repaired. Details of the periodic noise filtering operation are shown in the flowchart of Fig. 14 and in Step 6 of the attached pseudo-code.

Specifically, a five-point moving average is applied to the read values z₁ through z₆₀ represented in the graph of Fig. 13 to provide filtered values f₁ through f₆₀. In Step 1510, the first two filter values f₁ and f₂ are set equal to the smoothed normalized values z₁ and z₂, respectively, and the last two filtered values f₅₉ and f₆₀ are set equal to the two smoothed normalized values z₅₉ and z₆₀, respectively. Then, in Step 1520, the filtered value f₃ through f₅₈ are determined by taking the average of corresponding smoothed normalized values z₃ through z₅₈, respectively and surrounding smoothed normalized values. For example, filtered value f₃ is determined by taking the sum of smoothed normalized values z₁, z₂, z₃, z₄, and z₅, and dividing that sum by 5. Filtered value f₄ is determined by taking the sum of smoothed normalized value z₂, z₃, z₄, z₅, and z₆, and dividing that sum by 5. This process is repeated until all remaining filter f₃ through f₅₈ have been obtained.

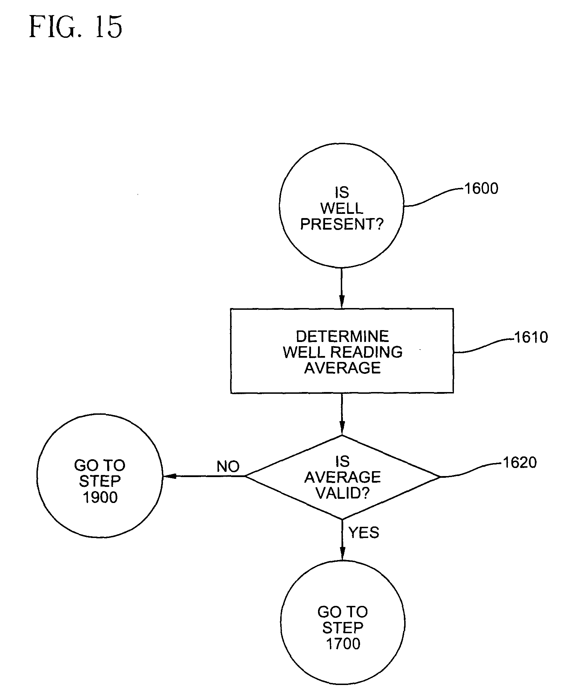

The processing then continues to Step 1600 shown in Fig. 6, in which the processing determines whether the filtered values f₁ through f₆₀, which were derived from the above-described steps from the raw data well read values r₁ through r₆₀, respectively, were actually taken of a well, or, in other words, whether a well was actually present at that location in the microwell array 116 of the sample tray assembly 112. Details of the well present determination processing are shown in the flowchart of Fig. 15 and in Step 7 of the pseudo-code.

Specifically, in Step 1610, a well reading average wp_{avg} is determined by adding the filter values f₁₀, f₂₀, f₃₀, f₄₀ and f₅₀, and dividing those values by 5. This well present average wp_{avg} is compared to a well threshold value WP_THRES, which in this example is set to 125.0. If, in Step 1620, the processing determines that the well present average wp_{avg} is greater than zero and less than the threshold value WP_THRES, then the processing determines that no well is present and that the data obtained is entirely erroneous. The processing then proceeds to Step 1900 in the flowchart shown in Fig. 6 where processing for that well is concluded. However, if the processing determines in Step 1620 that a well is present, the processing continues to Step 1700 in the flowchart shown in Fig. 6.

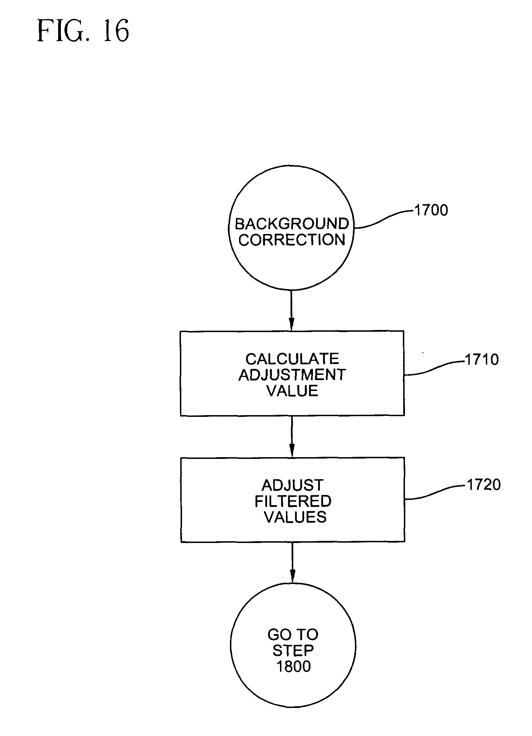

In Step 1700, the processing establishes a base line background correction, in which an average value based on, for example, the first five background values f₁ through f₅, is calculated. Other ranges of values, such as f₁₀ through f₁₅, may be used, depending on the assay. This average value is then subtracted from all of the filtered values f₁ through f₆₀. Additionally, the values used to calculate the average value can each be set to zero after being used to calculate the average value, although this is not required. Further details of this background correction operation is shown in the flowchart of Fig. 16 and in Step 8 of the pseudo-code.

That is, in Step 1710, the filtered values f₁ through f₅ are added to produce a sum value. In this example, the sum value is then divided by 5 to provide an initial adjustment value IA.

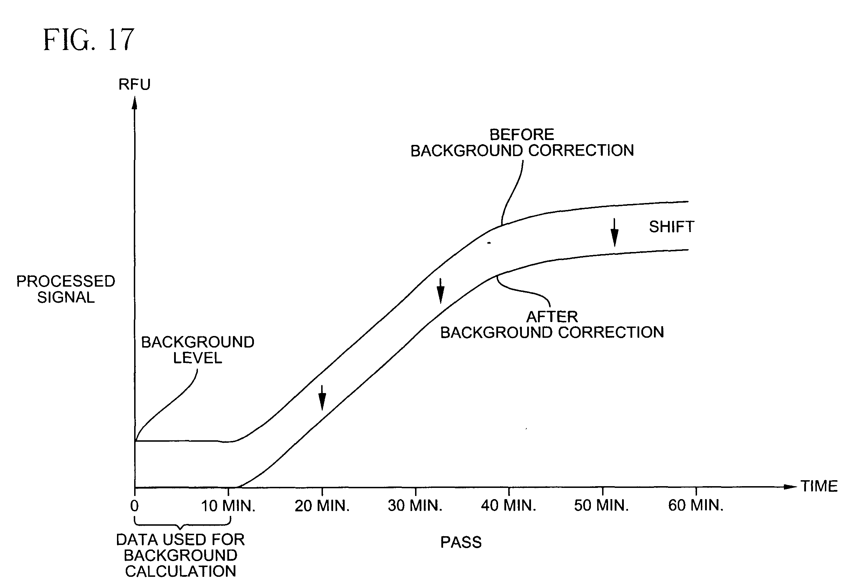

The processing then proceeds to Step 1720, in which the initial adjustment value IA is subtracted from each of the filter values f₁ through f₆₀. If, in performing the subtraction, the filter value becomes less than zero, that filtered value is set to zero. As shown in the graph of Fig. 17, this processing shifts the portion of the graph between filter values f₁ and f₆₀ down toward the horizontal axis. The processing then proceeds to Step 1800 in the flowchart of Fig. 6 to compare the corrected graph to a threshold value as will now be described.

It is noted that all of the processing steps performed above remove extraneous and additive values to provide a graph most suitable for comparison to the threshold value. However, it is only necessary to perform the background correction to produce a graph which can be compared to the threshold value to provide acceptable results.

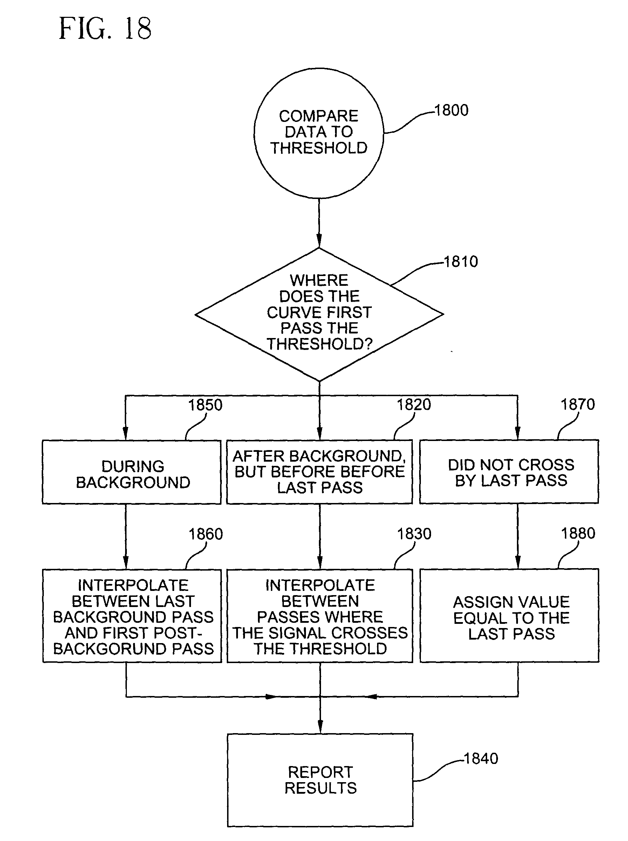

The threshold comparison step is described in more detail in the flowchart shown in Fig. 18. In step 1810; the corrected graph is compared to a threshold value which has been determined based on past results. In other words, it has been determined from past data readings taken to detect the presence of a particular disease (e.g., CT or GC) that the corrected reading values will exceed a particular value at some time during the 60 readings if that disease is indeed present in the sample (i.e., the sample is positive). Accordingly, the threshold value is chosen to be a value which will provide the most accurate indication as to the presence or absence of a disease of interest in the sample. This can be accomplished by choosing a threshold value which simultaneously maximizes sensitivity and specificity. In this example, the threshold value is chosen to be "100".

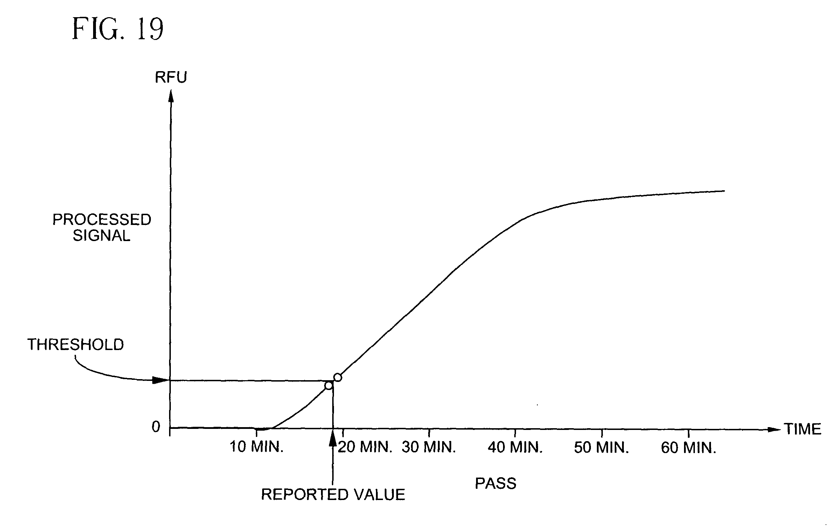

If the comparison determines that the first corrected value to exceed the threshold value is a value other than the first several values used to calculate the background correction value, the processing proceeds to steps 1820 and 1830 as shown in Fig. 18. The processing then interpolates to determine where the graph crosses the threshold. That is, as shown in Fig. 19, the value at which the graph crosses the threshold is between two actual reading values. Accordingly, the processing interpolates between the two actual values to calculate a reported value which is a value corresponding to the position on the x-axis (the time axis). For instance, if the graph crosses the threshold between readings 16 and 17, the interpolation will arrive at a reported value having a magnitude between 16 and 17 (e.g., 16.40). The processing then proceeds to step 1840, where the controller controls the well reading apparatus 100 to report the reported value and provide an indication that the sample in the corresponding well has tested positive for the targeted disease. This indication can be in the form of a display on the display screen 108, in the form data stored to a disk in the disk drive 106, and/or in the form of a print-out by a printer resident in or attached to the well reading apparatus 100.

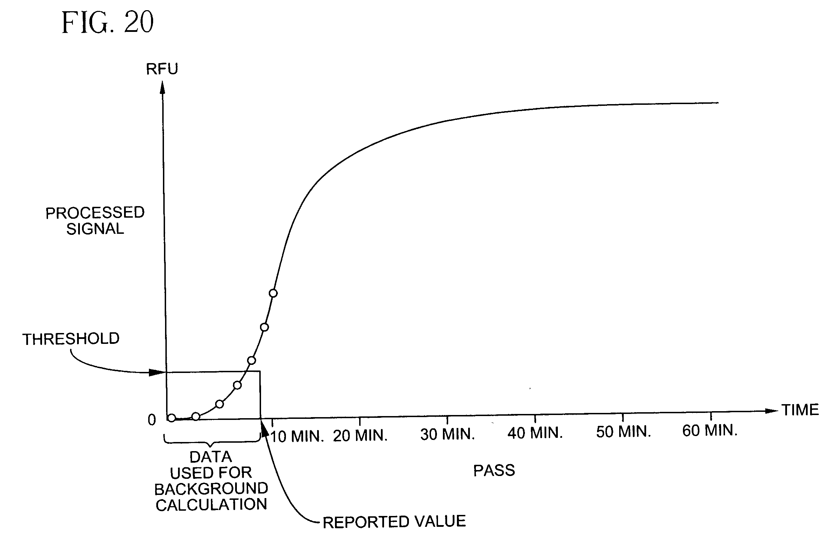

However, if the processing determines in step 1810 that the first corrected value to exceed the threshold value is a value among the first several values used to calculate the background correction value, the processing proceeds to steps 1850 and 1860 as shown in Fig. 18. This condition is shown in the graph of Fig. 20, and occurs when the sample is a very high positive sample containing a substantial amount of the pathogen of interest or target nucleic acid. The processing then interpolates between the last value among the values used for background correction and the next value outside the background correction value to calculate a reported value. For example, if the last value among the values used for background correction is 5, the interpolation will calculate a value between 5 and 6 (e.g., 5.70). The processing then proceeds to step 1840, where the controller controls the well reading apparatus 100 to provide an indication that the sample in the corresponding well has tested highly positive for the targeted pathogen or nucleic acid, in a manner similar to that described above. This indication can be in the form of a display on the display screen 108, in the form data stored to a disk in the disk drive 106, and/or in the form of a print-out by a printer resident in or attached to the well reading apparatus 100.

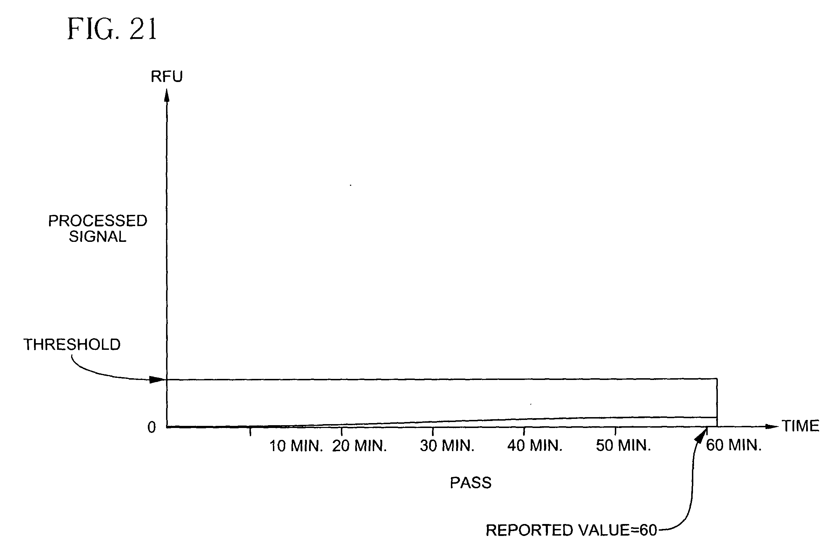

If the processing determines in step 1810 that none of the values in the graph exceed the threshold value, the processing proceeds to steps 1870 and 1880 as shown in Fig. 18. This condition is shown in the graph of Fig. 21, and occurs when the sample is a negative sample containing none or an insufficient amount of the pathogen of interest or target nucleic acid. The processing then designates the last value in the graph (i.e., 60) as the reported value. The processing then proceeds to step 1840, where the controller controls the well reading apparatus 100 to provide an indication that the sample in the corresponding well has tested negative for the targeted disease, in a manner similar to that described above. This indication can be in the form of a display on the display screen 108, in the form data stored to a disk in the disk drive 106, and/or in the form of a print-out by a printer resident in or attached to the well reading apparatus 100.

As discussed above, the manner in which the samples from patient number 1 collected in the other sample microwells are read and analyzed is essentially identical to that described above for the sample in the first sample microwell. Specifically, the 60 readings taken of the sample in each of the respective sample microwells are processed according to Steps 1000 through 1800 in Figs. 6 as described above.

The above processing can then performed for all of the patient samples in essentially the same manner. As discussed above, if each patient sample is being tested for 2 diseases, the microwell array 116 and the sample tray assembly 112 can accommodate samples from a maximum number of 30 patients. However, in some instances, the amplification control AC can be included as an internal control present in all of the wells. This amplification control can be illuminated by a different frequency light emitted by the light emitting/detecting ports 132 of the light sensor bar 130, or by a duplicate light sensor bar (not shown) as described in more detail in, for example, the above-referenced U.S. Patent No 6,043,880. In this event, a set of two microwells for each patient is required to test for two different diseases (e.g., CT and GC), and only one microwell per patient is required to test for one disease (e.g., CT or AC).

It is also noted that before any results are reported to patients, the values obtained from reading the CT, GC and AC positive and negative control samples are processed in the manner described above with regard to Steps 1000 through 1800, and the resulting values are analyzed to assure that the known positive and negative control samples have indeed been read as positive and negative samples, respectively. If the readings of any of these control samples are incorrect (i.e., a negative sample has been identified as a positive sample or vice-versa), all of the sample readings taken for the entire microwell tray are called into question. All of the sample data must be discarded, and new samples can be gathered in a new microwell array, and then read and evaluated in the manner described above.

Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention as defined in the following claims.

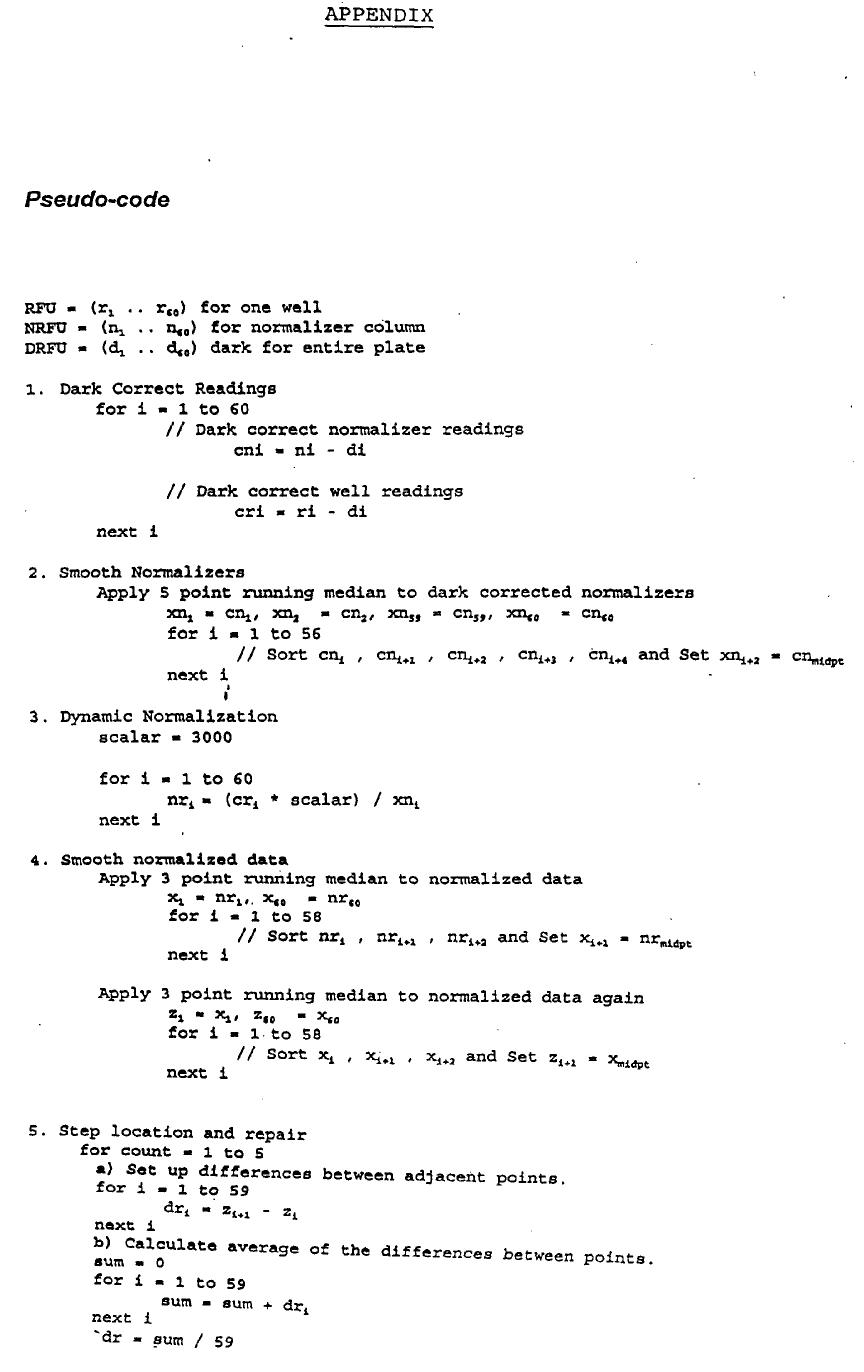

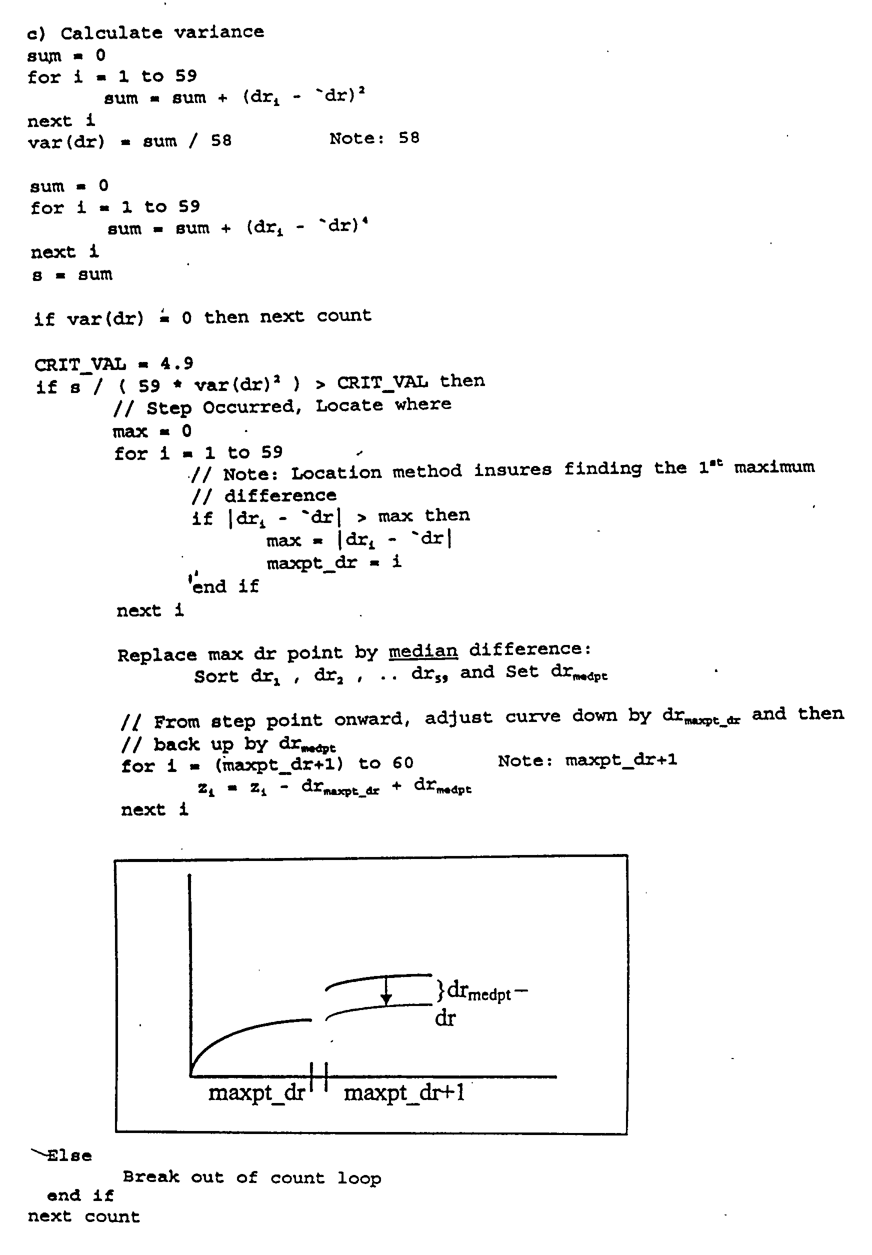

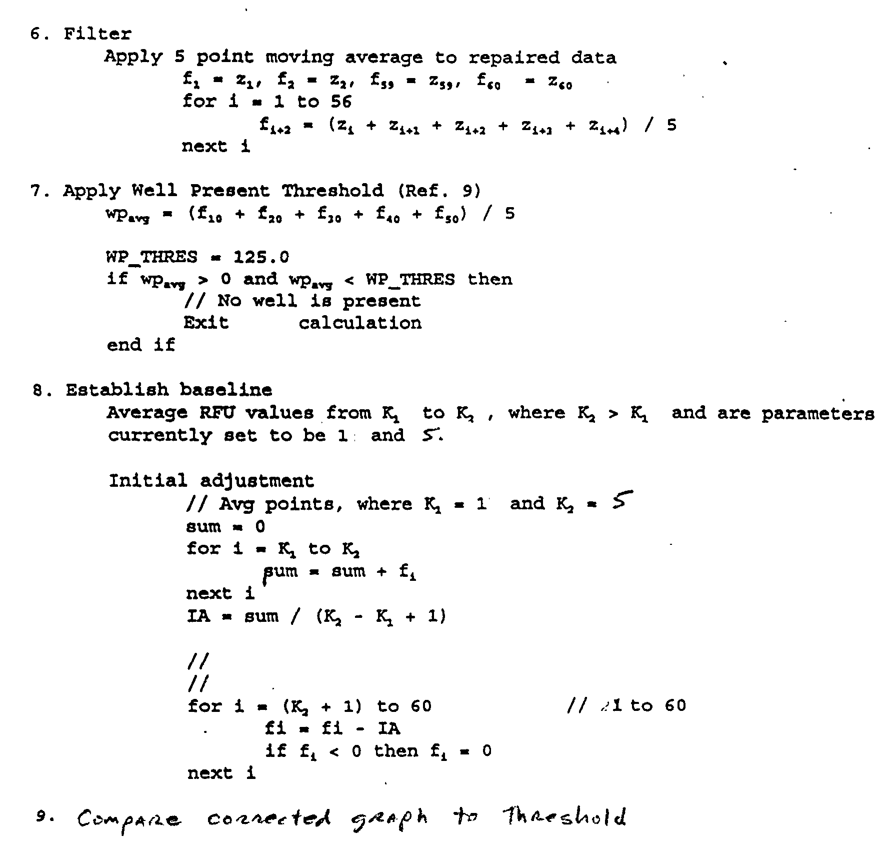

## Claims

1. A computerized method for controlling a system to analyze numerical data pertaining to a sample assay comprising at least one biological or chemical sample, and numerical data including a set of data pertaining to each respective sample, each said set of data including a plurality of data values, each representing a condition of said respective sample read at a respective point in time, said method comprising the steps of:
for each said set of data, performing the steps of:
assigning a respective numerical value to each of said data values;
calculating a correction value based on at least one of said numerical values;
adjusting each of said numerical values based on said correction value to provide respective corrected numerical values;
determining whether any of said corrected numerical values exceeds a threshold value;
and
controlling said system to indicate whether said sample has a predetermined characteristic based on a result of said determining step.

2. A method as claimed in claim 1, wherein:
said assigning step includes the step of arranging said data values in a sequence representative of said respective points in time; and
said determining steps sequentially compares said corrected numerical values to said threshold value until one of said corrected numerical values exceeds said threshold value.

3. A computerized method for controlling a system to analyze numerical data pertaining to a sample assay comprising at least one biological or chemical sample, said numerical data including a set of data pertaining to each respective sample, each said set of data including a plurality of data values, each representing a condition of said respective sample read at a respective point in time, said method comprising the steps of:
for each said set of data, performing the steps of:
representing each of said plurality of data values as points on a graph having a vertical axis representing the magnitudes of said values and a horizontal axis
representing a period of time during which readings of said sample were taken to obtain said plurality of data values;
calculating a correction value based on at least one said magnitudes of said data values;
adjusting each of said data values based on said correction value to provide a corrected graph of respective corrected value;
determining whether any of said corrected values of said corrected graph exceeds a threshold value in a direction of said vertical axis; and
controlling said system to indicate whether said sample has a predetermined characteristic based on a result of said determining step.

4. A method as claimed in claim 3, wherein:
said calculating step calculates said correction value based on a plurality of said magnitudes of said data values at a beginning of said graph.

5. A computer-readable medium of instructions for controlling a system to analyze numerical data pertaining to a sample assay comprising at least one biological or chemical sample, said numerical data including a set of data pertaining to each respective sample, each said set of data including a plurality of data values, each representing a condition of said respective sample read at a respective point in time, said medium of instructions comprising:
a first set of instructions, adapted to control said system to assign a respective numerical value to each of said data values;
a second set of instructions, adapted to control said system to calculate a correction value based on at least on of said numerical values;
a third set of instructions, adapted to control said system to adjust each of said numerical values based on said correction value to provide respective corrected numerical values;
a fourth set of instructions, adapted to control said system to determine whether any of said corrected numerical values exceeds a threshold value; and
a fifth set of instructions, adapted to control said system to indicate whether said sample has a predetermined characteristic based on a result of said determining step.

6. A computer-readable medium of instructions as claimed in claim 5, wherein:
said first set of instructions is further adapted to control said system to arrange said data values in a sequence representative of said respective points in time; and
said fourth set of instructions is further adapted to control said system to sequentially compare said corrected numerical values to said threshold value until one of said corrected numerical values exceeds said threshold value.

7. A system for analyzing numerical data pertaining to a sample assay comprising at least one biological or chemical sample, said numerical data including a set of data pertaining to each respective sample, each said set of data including a plurality of data values, each representing a condition of said respective sample read at a respective point in time, said system comprising:
means for assigning a respective numerical value to each of said data values;
means for calculating a correction value based on at least one of said numerical values;
means for adjusting each of said numerical values based on said correction value to provide respective corrected numerical values;
means for determining whether any of said corrected numerical values exceeds a threshold value; and
means for controlling said system to indicate whether said sample has a predetermined characteristic based on a result of said determining step.

8. A system as claimed in claim 7, wherein:
said assigning means includes means for arranging said data values in a sequence representative of said respective points in time; and
said determining means sequentially compares said corrected numerical values to said threshold value until one of said corrected numerical values exceeds said threshold value.

9. A system for analyzing numerical data pertaining to a sample assay comprising at least one biological or chemical sample, said numerical data including a set of data pertaining to each respective sample, each said set of data including a plurality of data values, each representing a condition of said respective sample read at a respective point in time, said system comprising:
means for representing each of said plurality of data values as points on a graph having a vertical axis representing the magnitudes of said values and a horizontal axis representing a period of time during which readings of said sample were taken to obtain said plurality of data values;
means for calculating a correction value based on at least one said magnitudes of said data values;
means for adjusting each of said data values based on said correction value to provide a corrected graph of respective corrected values;
means for determining whether any of said corrected values of said corrected graph exceeds a threshold value in a direction of said vertical axis; and
means for controlling said system to indicate whether said sample has a predetermined characteristic based on a result of said determining step.

10. A system as claimed in claim 9, wherein:
said calculating means calculates said correction value based on a plurality of said magnitudes of said data values at a beginning of said graph.
